(19) Europäisches Patentamt / European Patent Office / Office européen des brevets

(11) **EP 3 790 771 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(21) Anmeldenummer: **19724151.6**

(22) Anmeldetag: **08.05.2019**

(51) Int Cl.:
**B60R 19/18** *(2006.01)*    **B60R 21/04** *(2006.01)*

(86) Internationale Anmeldenummer:
**PCT/EP2019/061881**

(87) Internationale Veröffentlichungsnummer:
**WO 2019/215267 (14.11.2019 Gazette 2019/46)**

(54) **CRASHSTRUKTUR FÜR EIN KRAFTFAHRZEUG, VERFAHREN ZUM HERSTELLEN EINER SOLCHEN CRASHSTRUKTUR UND KRAFTFAHRZEUG MIT EINER SOLCHEN CRASHSTRUKTUR**

CRASH STRUCTURE FOR A MOTOR VEHICLE, METHOD FOR PRODUCING A CRASH STRUCTURE OF THIS TYPE, AND MOTOR VEHICLE HAVING A CRASH STRUCTURE OF THIS TYPE

STRUCTURE ANTI-COLLISION POUR UN VÉHICULE AUTOMOBILE, PROCÉDÉ SERVANT À FABRIQUER UNE STRUCTURE ANTI-COLLISION DE CE TYPE ET VÉHICULE AUTOMOBILE COMPRENANT UNE STRUCTURE ANTI-COLLISION DE CE TYPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2018 DE 102018111226**

(43) Veröffentlichungstag der Anmeldung:
**17.03.2021 Patentblatt 2021/11**

(73) Patentinhaber: **Next.E.Go Mobile SE**
**52074 Aachen (DE)**

(72) Erfinder: **VASAN SURESH, Jayanthan**
**52068 Aachen (DE)**

(74) Vertreter: **Nußbaum, Christopher**
**Patentanwaltskanzlei Nußbaum**
**Marktler Straße 15 B**
**84489 Burghausen (DE)**

(56) Entgegenhaltungen:
**WO-A1-2005/012043**    **US-A1- 2002 185 795**
**US-A1- 2004 256 867**    **US-A1- 2012 032 458**

**Beschreibung**

Die Erfindung betrifft eine Crashstruktur für ein Kraftfahrzeug, ein Verfahren zum Herstellen einer solchen Crashstruktur sowie ein Kraftfahrzeug mit einer solchen Crashstruktur.

Ist ein Kraftfahrzeug, insbesondere ein Personenkraftwagen, in einen Verkehrsunfall verwickelt, insbesondere mit einem wenig geschützten oder ungeschützten Verkehrsteilnehmer, zum Beispiel einem Fußgänger, dienen herkömmliche Crashstrukturen heutzutage dazu, unter einem Verformen derselben eine Aufprallenergie zwischen dem Kraftfahrzeug und dem Unfallgegner in eine Verformungsenergie umzuwandeln. Hierbei soll eine Relativgeschwindigkeit zwischen dem Kraftfahrzeug und dem Unfallgegner besonders schonend, insbesondere ruckfrei, abgebaut werden, sodass eine Verletzung des Unfallgegners und/oder eine Beschädigung des Kraftfahrzeugs jeweils besonders glimpflich ausfallen. Aus der US 2004/185795 A1 ist eine Crashstruktur gemäss dem Oberbegriff des Anspruchs 1 bekannt geworden.

Aufgabe der vorliegenden Erfindung ist es, eine Aufprallenergie zwischen einem in einen Unfall verwickelten Kraftfahrzeug und einem Unfallgegner auf besonders vorteilhafte Art und Weise in eine Verformungsenergie mittels einer besonders einfach herstellbaren Crashstruktur umzuwandeln.

Diese Aufgabe wird erfindungsgemäß durch eine Crashstruktur für ein Kraftfahrzeug mit den Merkmalen des Patentanspruchs 1 gelöst. Ferner wird diese Aufgabe durch ein Kraftfahrzeug mit einer solchen Crashstruktur gemäß dem Patentanspruch 10 gelöst. Zudem wird diese Aufgabe gemäß dem Patentanspruch 12 durch ein Verfahren zum Herstellen einer solchen Crashstruktur gelöst. Vorteilhafte Ausgestaltungen mit zweckmäßigen Weiterbildungen der Erfindung sind in den übrigen Patentansprüchen angegeben. Vorteile und vorteilhafte Ausgestaltungen der erfindungsgemäßen Crashstruktur sind als Vorteile und vorteilhafte Ausgestaltungen des erfindungsgemäßen Kraftfahrzeugs anzusehen und umgekehrt.

Erfindungsgemäß ist eine Crashstruktur für ein Kraftfahrzeug mit einem Trägerkörper vorgesehen, von dessen Trägerfläche wenigstens eine mit dem Trägerkörper einstückig ausgebildete Verformungseinheit hervorspringt. Die Verformungseinheit ist durch wenigstens zwei übereinander angeordnete und miteinander verbundene Verformungselemente und eine Aufprallfläche gebildet. Hierbei weist ein Längsschnitt des jeweiligen Verformungselements zwei einander gegenüberliegende, einer jeweiligen ungeraden Kurve folgende Längsschnittflächen auf. Ferner ist vorgesehen, dass die Aufprallfläche über die Verformungselemente von der Trägerfläche beabstandet ist. Der Trägerkörper, der zumindest teilweise aus einem Thermoplast gebildet sein kann, kann einen zumindest im Wesentlichen quaderförmige Form aufweisen. Eine der Oberflächen des Trägerkörpers bildet die Trägerfläche, von welcher sich die wenigstens eine Verformungseinheit weg von dem Trägerkörper erstreckt. Da die wenigstens eine Verformungseinheit einstückig mit dem Trägerkörper ausgebildet ist, gehen eine jeweilige Oberfläche der Verformungseinheit und die Trägerfläche nahtfrei ineinander über.

Die wenigstens zwei miteinander verbundenen Verformungselemente, insbesondere drei miteinander verbundene Verformungselemente, bilden die Verformungseinheit, indem sich die Verformungselemente ausgehend von der Trägerfläche weg von dem Trägerkörper erstrecken. Hierbei geht die Aufprallfläche nahtfrei in eine Außenumfangsfläche des direkt an die Aufprallfläche angrenzenden Verformungselements über, wobei auch zwischen den einzelnen Verformungselementen eine nahtfreie Verbindung realisiert ist, da die Aufprallfläche und die Verformungselemente miteinander einstückig ausgebildet sind.

Bei einer Schnittbetrachtung der Crashstruktur, insbesondere bei einem Längsschnitt des jeweiligen Verformungselements, folgen entsprechende Längsschnittflächen einer jeweiligen, von einer Geraden unterschiedlichen Kurve. Anders ausgedrückt weisen die einzelnen Verformungselemente jeweils eine von einem Kreisringzylinder unterschiedliche Form auf. Insbesondere weist eine jeweilige Krümmung der beiden Längsschnittflächen nach außen, das heißt weg von einem Inneren des entsprechenden Verformungselements. Das bedeutet, dass eine Innenumfangsfläche des jeweiligen Verformungselements entlang einer Innenumfangsrichtung des entsprechenden Verformungselements einen konkaven Verlauf beschreibt.

Mittels dieser Crashstruktur, insbesondere aufgrund der jeweils ungerade ausgebildeten Längsschnittflächen, ist auf besonders vorteilhafte Art und Weise eine besonders hohe Aufprallenergie zwischen dem Kraftfahrzeug und einem Unfallgegner aufzunehmen und/oder in eine Verformungsenergie umzuwandeln. Dies ist insofern vorteilhaft, als eine Relativgeschwindigkeit zwischen dem in den Unfall verwickelten Kraftfahrzeug und dem Unfallgegner besonders schonend abgebaut wird, sodass der Unfallgegner, insbesondere ein wenig geschützter oder ungeschützter Verkehrsteilnehmer, zum Beispiel ein Fußgänger, ein Zweiradfahrer etc., lediglich besonders leicht, idealerweise überhaupt nicht verletzt wird. Hierbei ist die Crashstruktur in der Lage, ein besonders hohes Maß an Aufprallenergie kontrolliert zu absorbieren bzw. in die Verformungsenergie umzuwandeln, bevor die Crashstruktur bzw. die wenigstens eine Verformungseinheit vollständig kollabiert ist.

Demnach ist eine besonders effizient wirkende Crashstruktur geschaffen, mittels welcher einem Gedanken an einen besonders wirksamen Fußgängerschutz in besonderer Weise Rechnung getragen ist.

Diese ganz spezielle, doppelt gekrümmte Geometrie des Verformungselements hat einen maßgeblichen Einfluss auf die Fähigkeit, Kräfte, insbesondere bei einem Unfall auftretende Kräfte, aufzunehmen. Das bedeutet, dass eine Materialart einen besonders geringen Einfluss auf diese Fähigkeit (Kraftaufnahme) hat. Infolgedessen kann die Crashstruktur anstatt aus einem besonders schweren Material, zum Beispiel Metall, aus einem leichteren Material, zum Beispiel Kunststoff, wie PP (Polypropylen) etc., hergestellt werden. Dennoch ist die aus dem Kunststoff hergestellte Crashstruktur dann in der Lage, eine ähnlich hohe Kraft aufzunehmen, wie eine schwerere, aus dem Metall hergestellte Crashstruktur gleicher Geometrie.

Hieraus ergibt sich außerdem eine besonders einfache bzw. aufwandsarme Herstellung der Crashstruktur. Denn der Thermoplast lässt sich energieeffizienter umformen als ein Metall, bei welchem im Vergleich zu einem Kunststoff höhere Umformkräfte und/oder aufwendigere Umformverfahren vonnöten sind. Als Resultat ist eine leichtere, zumindest im Wesentlichen gleich leistungsfähige und kosteneffizienter herstellbare Crashstruktur bereitgestellt.

Darüber hinaus weist PP im Vergleich mit ABS (Acrylnitril-Butadien-Styrol) bessere Elastizitätseigenschaften auf, sodass eine Gefahr, dass die Crashstruktur aufgrund eines geringfügigen Fußgängeraufpralls auf die Crashstruktur dauerhaft beschädigt wird, geringer ist, als wenn die Crashstruktur aus ABS hergestellt ist. Entsprechend kann ein Austausch der Crashstruktur nach einem solchen Unfall entfallen, sodass Reparaturkosten besonders gering sind.

Verglichen mit herkömmlichen Crashstrukturen zeigt die erfindungsgemäße Crashstruktur auch ein vorteilhafteres Verhalten bei einem vorgegebenen, zum Beispiel genormten Crashtest mit niedriger Aufprallgeschwindigkeit gegen ein starres Ziel ("lowspeed crash test"). Herkömmliche, für einen Fußgängerschutz ausgebildete Crashstrukturen sind in der Lage, lediglich etwas 4 % bis 6 % einer bei einem solchen Crashtest auftretenden Aufprallenergie aufzunehmen. Deshalb sind heutzutage, um einen ausreichenden Insassenschutz bzw. eine ausreichende Fahrzeugstabilität zu gewährleisten, besonders masseintensive, das heißt schwere Crashboxen in der herkömmlichen Fahrzeugträgerstruktur (zum Beispiel Spaceframe) vorzusehen. So soll einer schadensträchtigen Beschädigung des Kraftfahrzeugs entgegengewirkt werden.

Die erfindungsgemäße Crashstruktur hingegen baut, insbesondere aufgrund der zuvor beschriebenen Merkmale, bis zu 48 % der Aufprallenergie bei einem solchen Niedriggeschwindigkeitsaufprall ab und schützt infolgedessen andere, insbesondere besonders schwierig reparierbare und/oder kostenintensive Bauteile des Kraftfahrzeugs, das mit der erfindungsgemäßen Crashstruktur ausgerüstet ist. Bei einer Bewertung des Kraftfahrzeugs durch Versicherer, beispielsweise um festzustellen, in welche Versicherungsklasse das Kraftfahrzeug einzustufen ist, führt demnach die Crashstruktur zu einer besonders vorteilhaften, das heißt für einen Nutzer des Kraftfahrzeugs günstigen Einstufung.

Erfindungsgemäss ist die jeweilige ungerade Kurve, der die jeweilige Längsschnittfläche folgt, ein Hyperbelast. Es ist zu verstehen, dass die eine der beiden Längsschnittflächen einem Hyperbelast einer ersten Hyperbel folgen kann, während die andere der beiden Längsschnittflächen einem Hyperbelast einer anderen Hyperbel folgen kann. Es ist aber auch möglich, dass der jeweilige Hyperbelast der beiden Längsschnittflächen zu einer gemeinsamen Hyperbel zählt. Jedenfalls sind die beiden Hyperbeläste zueinander so angeordnet, dass, wie bereits beschrieben, die Innenumfangsfläche des entsprechenden Verformungselements entlang der Innenumfangsrichtung konkav ausgebildet ist. Mit anderen Worten ist die Innenumfangsfläche und infolgedessen eine mit der Innenumfangsfläche über ein Material des jeweiligen Verformungselements verbundene Außenumfangsfläche weg von einem materialfreien Innenraum des jeweiligen Verformungselements nach außen hin gewölbt. Das bedeutet, dass die Innenumfangsfläche und die Außenumfangsfläche miteinander eine nach außen gewölbte Wand des jeweiligen Verformungselements bilden. Hierbei folgt die nach außen gewölbte Wand zumindest teilweise einem hyperbolischen Paraboloid.

Aufgrund dieser ganz speziellen Geometrie der Verformungselemente bzw. der Verformungseinheit ist mittels der Crashstruktur eine besonders hohe Aufprallenergie in eine Verformungsarbeit umwandelbar, sodass die Relativgeschwindigkeit zwischen dem in den Unfall verwickelten Kraftfahrzeug und dem Unfallgegner noch schonender abbaubar ist.

In weiterer Ausbildung der Crashstruktur weist ein Querschnitt des jeweiligen Verformungselements eine einem Oval folgende Querschnittsfläche auf. Insbesondere kann das Oval als ein symmetrisches Oval oder ein nicht-symmetrisches bzw. unsymmetrisches Oval ausgebildet sein. Des Weiteren kann das Oval als eine Ellipse, insbesondere als ein Kreis, ausgebildet sein. Das bedeutet, dass die Innenumfangsfläche des entsprechenden Verformungselements entlang dessen Innenumfangsrichtung dem Oval bzw. der Ellipse, insbesondere dem Kreis, folgen kann. Auf analoge Weise kann die Außenumfangsrichtung des entsprechenden Verformungselements diesem Oval folgen, wobei die Außenumfangsfläche des entsprechenden Verformungselements über einen konstanten oder nicht konstanten Abstand von dem Oval beabstandet ist. Es ist aber auch denkbar, dass die Außenumfangsrichtung des entsprechenden Verformungselements einem anderen Oval folgt. Entsprechend kann eine Außenform des Verformungselements einem Ovoid folgen.

Diese geometrische Ausprägung der wenigstens einen Verformungseinheit bzw. der Verformungselemente führt zu einer noch höheren Effizienz des Verformens der Crashstruktur bei einem oder durch einen Aufprall des Unfallgegners auf die Crashstruktur bzw. auf das Kraftfahrzeug.

Um ein abgestuftes Ansprechverhalten der Crashstruktur auf unterschiedlich starke Aufprallenergien realisieren zu können, kann vorgesehen sein, dass die beiden Verformungselemente in einem jeweiligen, nah der Trägerfläche angeordneten, proximalen Bereich entlang einer jeweiligen Innenumfangsrichtung eine größere Fläche einschließen als in einem jeweiligen, fern der Trägerfläche angeordneten, distalen Bereich. Hierdurch lässt sich beispielsweise realisieren, dass bei einer besonders geringen Aufprallenergie lediglich das am weitesten von der Trägerfläche entfernte Verformungselement der Verformungseinheit die Aufprallenergie aufnimmt und mittels des Verrichtens der Verformungsarbeit die Aufprallenergie in die Verformungsenergie umwandelt. Bei einer besonders hohen Aufprallenergie kann vorgesehen sein, dass zusätzlich oder anstelle des am weitesten von der Trägerfläche entfernten Verformungselements ein näher an der Trägerfläche angeordnetes, weiteres Verformungselement die besonders hohe Aufprallenergie entsprechend aufnimmt. Mit anderen Worten passt sich die Crashstruktur an ein auftretendes Maß der Aufprallenergie an.

Ein jeweiliger proximaler, also nahe an der Trägerfläche angeordneter, Bereich des jeweiligen Verformungselements kann einen Anschlussbereich bilden oder kann in dem Anschlussbereich gebildet sein. Über den Anschlussbereich ist das jeweilige Verformungselement, insbesondere direkt, an der Trägerfläche oder, insbesondere direkt, an einem weiteren Verformungselement angeschlossen. Grenzt das betrachtete Verformungselement nicht direkt an die Trägerfläche an, so ist dieses Verformungselement über dessen Anschlussbereich bzw. über dessen proximalen Bereich an einen distalen, also entfernt von der Trägerfläche angeordneten, Bereich eines direkt zu dem betrachteten Verformungselement benachbarten Verformungselements angeschlossen. Ein distaler Bereich des am weitesten von der Trägerfläche entfernten Verformungselements kann die Aufprallfläche umfassen oder in diese übergehen oder diese bilden.

Da die von dem proximalen Bereich eingeschlossene Fläche größer ist als die von dem distalen Bereich eingeschlossene Fläche, kann sich das Verformungselement ausgehend von der Trägerfläche in Richtung zu der Aufprallfläche hin unter Ausbildung einer konvexen, konkaven und/oder geraden Außenumfangsfläche verjüngen. Besonders bevorzugt ist es jedoch, wenn sich das Verformungselement ausgehend von dessen proximalen Bereich bei einem konkaven Verlauf der Außenumfangsfläche einmal, insbesondere lediglich einmal, bis auf ein Maximum erweitert und dann in den distalen Bereich mündet. Einfacher ausgedrückt kann die Außenumfangsfläche des entsprechenden Verformungselements quasi einer Eiform folgen.

Des Weiteren kann bei der Crashstruktur ein zwischen den beiden Verformungselementen angeordnetes Verbindungselement vorgesehen sein, über welches die beiden Verformungselemente miteinander verbunden sind. Demnach folgt eine Querschnittsfläche des Verbindungselements einem Oval, das zu dem Oval des jeweiligen Verformungselements zumindest kongruent ist. Im Längsschnitt betrachtet kann das jeweilige Verbindungselement zwei einander gegenüberliegende, einer jeweiligen ungeraden Kurve folgende Längsschnittflächen aufweisen. Es ist jedoch auch denkbar, dass die beiden Längsschnittflächen des jeweiligen Verbindungselements einer Gerade folgen.

Durch eine Anordnung des Verbindungselements zwischen zwei zueinander benachbarten Verformungselementen sind diese bei dem oder durch den Aufprall definiert verformbar, zum Beispiel kann das Verbindungselement in das näher an der Trägerfläche angeordnete Verformungselement eingestülpt werden, sodass aufgrund einer Verformung der Verformungseinheit das weiter von der Trägerfläche entfernte Verformungselement in das näher an der Trägerfläche angeordnete Verformungselement eingreift. Auf diese Weise ist wirksam verhindert, dass beim Verformen der Verformungseinheit bzw. der Verformungselemente die Verformung zumindest im Wesentlichen entlang einer Hauptverformungsrichtung stattfindet und ein laterales Ausweichen der Verformungselemente bzw. der Verformungseinheit verhindert ist. Hierbei ist es von besonderem Vorteil, wenn die Hauptverformungsrichtung in Einbaulage der Crashstruktur zumindest parallel zu einer Fahrzeuglängsachse verläuft und/oder zumindest im Wesentlichen mit dieser zusammenfällt.

In diesem Zusammenhang kann vorgesehen sein, dass eine Außenkontur des Verbindungselements zumindest im Wesentlichen als ein Kegelstumpf ausgebildet ist, dessen Mantelfläche mit einer außerhalb des jeweiligen Verbindungselements angeordneten Vertikalen, zum Beispiel einer Parallelen zu der Trägerfläche, einen vorgegebenen, von 90 Grad unterschiedlichen Winkel bildet. Eine auf das distale Verformungselement einwirkende Kraft wird entsprechend den physikalischen Gesetzten dann aufgrund der winkligen Außenkontur des Verbindungselements in eine horizontale und eine vertikale Kraftkomponente aufgeteilt. Hierdurch ist mehr Kraft mittels des Verformungselements aufnehmbar.

Für eine maximale Kraftaufnahme beträgt der Winkel 120 Grad, sodass die Mantelfläche einen Winkel von 60 Grad einschließt. Insbesondere aufgrund einer Bauraumbeschränkung kann dieser Winkel von 90 Grad bis 180 Grad, bevorzugt von 130 Grad bis 179 Grad, besonders bevorzugt von 170 Grad bis 178 Grad, idealerweise 177 Grad betragen. Demnach schließt die Außenumfangsfläche zusammen mit einer im Inneren des Verformungselements angeordneten Vertikalen oder Parallelen zur Trägerfläche entsprechend supplementär einen Winkel von idealerweise 3 Grad ein. Durch diese ganz spezifische Ausbildung des Winkels zwischen der/den Vertikalen und der Mantelfläche des Verbindungselements ist ein ideales Gleichgewicht zwischen einer Formstabilität der Verformungseinheit und dem Verformungsvermögen derselben realisiert. Mit anderen Worten ist die Verformungseinheit bzw. die Crashstruktur mit dem derart ausgebildeten Winkel nicht zu hart, um die Relativgeschwindigkeit zwischen dem Unfallgegner und der Crashstruktur besonders schonend abzubauen. Gleichermaßen ist die Crashstruktur bzw. die Verformungseinheit nicht zu weich, um zu schnell verformt zu werden bzw. zu schnell vollständig zu kollabieren, was dem besonders schonenden Abbau der Relativgeschwindigkeit zuwiderliefe.

Um den besonders schonenden Abbau der Relativgeschwindigkeit zwischen dem Unfallgegner und dem Kraftfahrzeug bzw. der Crashstruktur weiter zu unterstützen, ist es besonders bevorzugt, wenn sich die Crashstruktur möglichst großflächig an eine Form des Unfallgegners, zum Beispiel einen Unterschenkel, Oberschenkel etc., anlegt, bevor der Abbauvorgang der Relativgeschwindigkeit beginnt. Hierzu kann vorgesehen sein, dass die Aufprallfläche und die Trägerfläche zueinander schräg angeordnet sind. Dann ist einerseits die Crashstruktur besonders bauraumeffizient in das Kraftfahrzeug integrierbar und andererseits eine maximale Schutzwirkung für den wenig geschützten bzw. ungeschützten Verkehrsteilnehmer gewährleistet.

Alternativ kann vorgesehen sein, dass die Aufprallfläche und die Trägerfläche zueinander parallel angeordnet sind. Insbesondere bei einem Einsatz der Crashstruktur in einem Bereich des Kraftwagens, wo erfahrungsgemäß mit einem nahezu senkrechten Auftreffen des Unfallgegners zu rechnen ist, ist hierdurch eine maximale Schutzwirkung für den Unfallgegner, insbesondere den wenig geschützten oder ungeschützten Verkehrsteilnehmer, gewährleistet.

Um einen besonders großflächigen Bereich des Kraftfahrzeugs mittels der Crashstruktur für den Unfallgegner abzusichern, kann die Crashstruktur zumindest eine weitere Verformungseinheit aufweisen, wobei die erste und die weitere Verformungseinheit entlang der Trägerfläche übereinander und/oder nebeneinander angeordnet sind. Beispielsweise können entlang der Trägerfläche mehrere Verformungseinheiten unregelmäßig verteilt sein. Besonders bevorzugt ist es, wenn die mehreren Verformungseinheiten zueinander über einen regelmäßigen Abstand voneinander beabstandet sind. Insbesondere haben sich eine reihenartige Anordnung sowie eine zumindest im Wesentlichen symmetrische Ausbildung der Crashstruktur als vorteilhaft erwiesen. Auf diese Weise ist die Aufprallenergie zwischen dem Kraftfahrzeug und dem Unfallgegner auf mehrere Verformungseinheiten verteilbar, sodass die Aufprallenergie besonders großflächig und besonders effizient mittels der Crashstruktur unter Verrichtung von Verformungsarbeit in Verformungsenergie umgewandelt werden kann.

Es kann darüber hinaus vorgesehen sein, dass der Trägerkörper der Crashstruktur wenigstens eine laterale Lasche aufweist, über welche die Crashstruktur in das Kraftfahrzeug integrierbar ist. Insbesondere können der Trägerkörper und die wenigstens eine laterale Lasche miteinander einstückig ausgebildet sein. Es ist jedoch auch denkbar, dass die wenigstens eine laterale Lasche und der Trägerkörper miteinander kraft-, form- und/oder stoffschlüssig miteinander verbunden sind. Besonders bevorzugt ist es, wenn der Trägerkörper entlang zweier paralleler Kanten jeweils eine laterale Lasche aufweist, sodass die Crashstruktur besonders positionsfest in das Kraftfahrzeug integrierbar ist. Hierzu kann die laterale Lasche bzw. können die lateralen Laschen eine Befestigungseinrichtung aufweisen, welche beispielsweise zumindest eine die jeweilige laterale Lasche vollständig durchdringende Durchgangsöffnung umfasst, um die Crashstruktur über die laterale Lasche bzw. über die lateralen Laschen durch die Durchgangsöffnung hindurch mit einer Trägerstruktur oder einem sonstigen Bauteil des Kraftfahrzeugs zu verschrauben. Die laterale Lasche kann sich vom Trägerkörper in eine gleiche Richtung erstrecken, wie die einzelnen Verformungselemente. Alternativ kann sich die laterale Lasche in eine Richtung erstrecken, welche zu den einzelnen Verformungselementen entgegengesetzt ist. Wenn mehr als eine laterale Lasche eingesetzt ist, können die einzelnen lateralen Laschen von dem Trägerkörper in entgegengesetzte Richtungen hervorspringen.

Die Erfindung betrifft des Weiteren ein Kraftfahrzeug mit der hierin zuvor beschriebenen Crashstruktur, mittels welcher die Aufprallenergie unter dem Verformen wenigstens eines der beiden Verformungselemente zumindest größtenteils in die Verformungsenergie umwandelbar ist.

Mittels des mit der erfindungsgemäßen Crashstruktur ausgestatteten Kraftfahrzeugs ist die Aufprallenergie zwischen dem Unfallgegner und dem in einen Verkehrsunfall verwickelten Kraftfahrzeug auf besonders vorteilhafte Art und Weise mittels der zuvor beschriebenen Crashstruktur unter Verrichtung der Verformungsarbeit in die Verformungsenergie umwandelbar.

Es hat sich als besonders vorteilhaft herausgestellt, wenn ein Stoßfänger des Kraftfahrzeugs zumindest teilweise durch die Crashstruktur gebildet ist. Üblicherweise ist ein solcher Stoßfänger in oder an dem Bereich des Kraftfahrzeugs angeordnet, auf welchem mit besonders hoher Wahrscheinlichkeit der wenig geschützte oder ungeschützte Verkehrsteilnehmer, insbesondere dessen Kopf, Torso und/oder Extremitäten, beim Unfall aufschlagen. Dementsprechend kann vorgesehen sein, dass ein vorderer und/oder hinterer Stoßfänger, welche jeweils gemeinhin auch als Stoßstange bezeichnet werden, die Crashstruktur aufweisen oder zumindest teilweise aus der Crashstruktur gebildet ist/sind. Genauso ist die Crashstruktur an seitlichen Stoßfängern des Kraftfahrzeugs applizierbar, sodass auch ein frontaler Aufprall des Unfallgegners auf eine Seite des Kraftfahrzeugs, zum Beispiel eine Tür desselben, mittels der Crashstruktur abgemildert werden kann. Insbesondere im Hinblick auf einen Fußgänger als Unfallgegner kann die Crashstruktur alternativ oder zusätzlich in ein Dach, in eine Motorhaube, in einen Heckdeckel und/oder eine sonstige Klappe des Kraftfahrzeugs integriert sein, um die Aufprallenergie zwischen dem Fußgänger und dem Kraftfahrzeug besonders effizient aufnehmen zu können.

Des Weiteren betrifft die Erfindung ein Verfahren zum Herstellen der zuvor hierin beschriebenen Crashstruktur. Hierbei wird in einem ersten Schritt der einen flachen Anteil aufweisende Trägerkörper bereitgestellt. In einem weiteren, zum Beispiel zweiten Schritt des Verfahrens wird zumindest der flache Anteil des Trägerkörpers mittels einer Heizeinrichtung eines Umformwerkzeugs erwärmt. Insbesondere kann vorgesehen sein, dass der gesamte Trägerkörper mittels der Heizeinrichtung erwärmt wird. Hierbei wird der Trägerkörper, welcher, wie weiter oben beschrieben zumindest teilweise aus einem Thermoplast hergestellt sein kann, bis auf eine Umformtemperatur erwärmt, sodass der so erwärmte Trägerkörper besonders einfach umformbar ist.

In einem weiteren, zum Beispiel dritten Schritt des Verfahrens wird zwischen dem flachen Anteil des Trägerkörpers und einer Negativform der wenigstens einen Verformungseinheit mittels einer Vakuumeinrichtung des Umformwerkzeugs ein Unterdruck erzeugt. Hierbei ist vorgesehen, dass die Negativform ein Bestandteil des Umformwerkzeugs ist. Mittels des in der Negativform erzeugten Unterdrucks legt sich ein Material, insbesondere Thermopalst, des flachen Anteils an eine Innenkontur der Negativform an und infolgedessen wird die wenigstens eine Verformungseinheit an dem Trägerkörper ausgeformt.

Auf diese Weise ist die Crashstruktur besonders einfach und aufwandsarm herstellbar. Insbesondere ist die Crashstruktur besonders materialeffizient herstellbar, da eine spanende Bearbeitung, wie Bohren, Drehen, Fräsen, etc., insbesondere vollständig entfällt. Des Weiteren ist auch ein besonders aufwändiger Einsatz von Fügeverfahren vermieden, da mittels dieses Verfahrens der Trägerkörper und die wenigstens eine Verformungseinheit miteinander einstückig ausgebildet werden. Obwohl eine Geometrie der wenigstens einen Verformungseinheit, beispielsweise im Vergleich zu einer rein kreiszylindrischen Verformungseinheit, relativ komplex ist, ist die Crashstruktur mittels dieses Verfahrens besonders schnell und toleranzarm herstellbar.

Nach einem Abkühlen des Trägerkörpers, sodass dieser eine Temperatur innehat die wesentlich unterhalb der Verformungstemperatur liegt, ist die mittels des Verfahrens gefertigte Crashstruktur zumindest im Wesentlichen biegesteif und infolgedessen ohne Weiteres handhabbar, sodass die gefertigte Crashstruktur aus dem Umformwerkzeug zu entfernen ist und in weiterer Folge in das Kraftfahrzeug integriert werden kann.

Es kann vorgesehen sein, dass der unverformte Trägerkörper von einer Rolle abgewickelt und dem Umformwerkzeug zugeführt wird. Mit anderen Worten kann der flache Trägerkörper unter einem Abwickeln von der Rolle dem Umformwerkzeug zugeführt werden. Es ist jedoch auch möglich, dass der Trägerkörper als Plattenware bzw. Stapelgut bereitgestellt und dem Umformwerkzeug zugeführt wird.

Jedenfalls kann vor und/oder nach dem Ausbilden der wenigstens einen Verformungseinheit ein Ablängen des Trägerkörpers erfolgen, um der Crashstruktur eine gewünschte Form und/oder eine gewünschte Ausdehnung zu verleihen.

Des Weiteren kann vorgesehen sein, dass in analoger Weise, wie die wenigstens eine Verformungseinheit ausgebildet wird, die wenigstens eine laterale Lasche an dem Trägerkörper ausgebildet wird. Insbesondere kann das Umformwerkzeug eine entsprechende Negativform bzw. einen Ansaugbereich aufweisen, in welche bzw. in oder an welchen ein oder mehrere Materialanteile des Trägerkörpers unter Erzeugung des Unterdrucks an- und/oder eingesaugt werden, wodurch die wenigstens eine laterale Lasche, insbesondere in einem gemeinsamen Arbeitsgang mit der wenigstens einen Verformungseinheit, ausgebildet wird.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten Merkmale und Merkmalskombinationen sind dabei nicht nur in Alleinstellung sondern auch in Kombination untereinander verwendbar, ohne den Rahmen der Erfindung zu verlassen. Die Zeichnung zeigt in:

Fig. 1    eine perspektivische Ansicht einer Crashstruktur;

Fig. 2    eine perspektivische und entlang einer in Fig. 1 gezeigten Schnittebene geschnittene Ansicht der Crashstruktur;

Fig. 3    eine Längsschnittansicht einer Verformungseinheit entlang der in Fig. 1 gezeigten Schnittebene;

Fig. 4    eine entlang einer in Fig. 3 gezeigten Schnittebene geschnittene Teilansicht der Crashstruktur mit Blick in ein Inneres der Verformungseinheit;

Fig. 5    eine perspektivische und entlang der in Fig. 1 gezeigten Schnittebene geschnittene Ansicht einer nach einer weiteren Ausbildungsform der Crashstruktur;

Fig. 6    eine schematische Darstellung eines Kraftfahrzeugs mit der Crashstruktur;

Fig. 7    ein schematischer Ablauf eines Verfahrens zum Herstellen der Crashstruktur;

Fig. 8    eine perspektivische Darstellung einer Klappe eines Kraftfahrzeugs; und

Fig. 9    eine Schnittansicht entlang einer die Klappe senkrecht schneidenden Längsschnittebene.

In den Figuren sind gleiche oder funktionsgleiche Elemente mit den gleichen Bezugszeichen versehen.

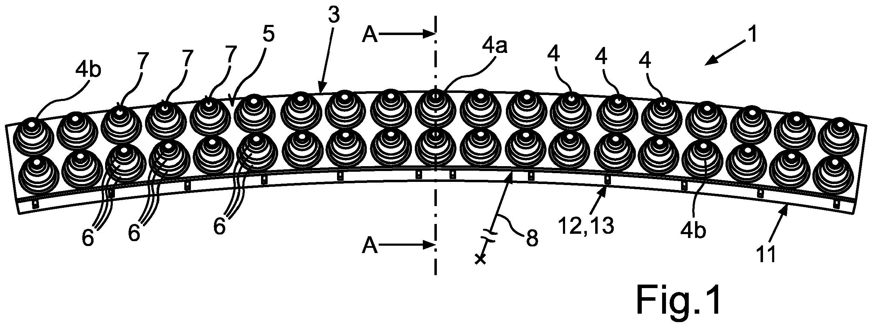

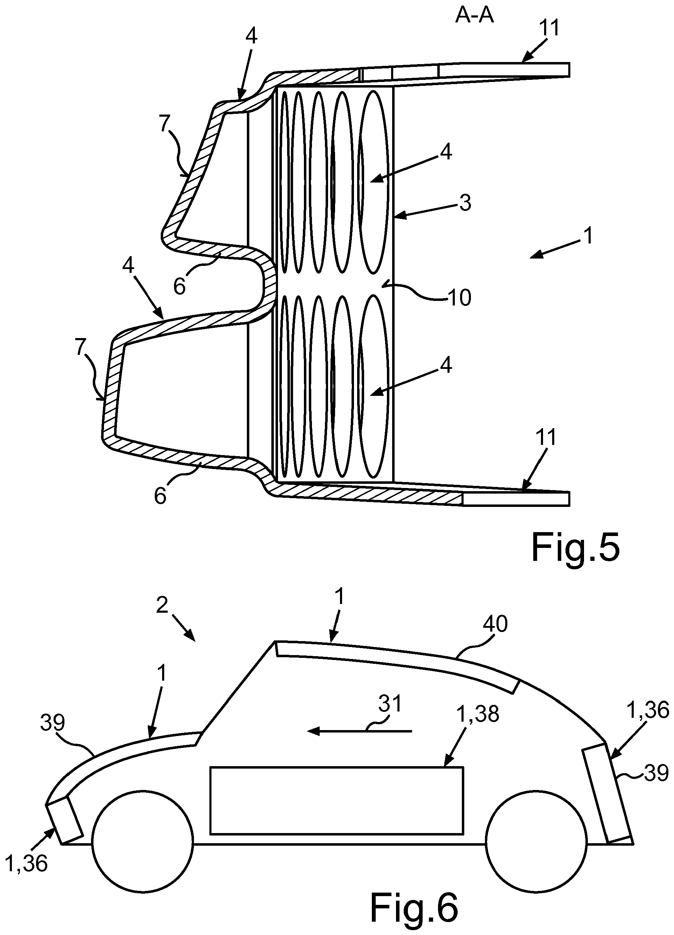

Fig. 1 zeigt in einer perspektivischen Ansicht eine Crashstruktur 1 für ein Kraftfahrzeug 2 (erstmals gezeigt in Fig. 6). Von einem zumindest im Wesentlichen quaderförmig ausgebildeten Trägerkörper 3 erstreckt sich eine Vielzahl von Verformungseinheiten 4.

Insbesondere springen die jeweiligen bzw. einzelnen Verformungseinheiten 4 von einer Trägerfläche 5 des Trägerkörpers 3 hervor. Im vorliegenden Beispiel weist die Crashstruktur 1 38 Verformungseinheiten 4 auf, welche in zwei zueinander parallel verlaufenden Reihen zu je 19 Verformungseinheiten 4 angeordnet sind.

Die jeweilige Verformungseinheit 4 weist wenigstens zwei, vorliegend drei übereinander angeordnete und miteinander verbundene Verformungselemente 6 auf, über welche eine jeweilige Aufprallfläche 7 von der Trägerfläche 5 beabstandet ist.

Bei einer vergleichenden Betrachtung zwischen zumindest im Wesentlichen mittig auf dem Trägerkörper 3 angeordneten Verformungseinheiten 4a und außerhalb der Mitte des Trägerkörpers 3 angeordneten Verformungseinheiten 4b ist zu erkennen, das die einzelnen Verformungselemente 6 der mittigen Verformungseinheiten 4 koaxial übereinander angeordnet sein können. Bei den weiter außen liegenden Verformungseinheiten 4b kann vorgesehen sein, dass die jeweiligen Verformungselement 6 nicht koaxial zueinander angeordnet sind.

Um eine besonders vorteilhafte Integration der Crashstruktur 1 in das Kraftfahrzeug 2 zu ermöglichen, kann vorgesehen sein, dass der Trägerkörper einen Radius 8 aufweist, sodass der Trägerkörper als Teil einer Mantelfläche eines durch den Radius 8 bestimmten Kreiszylinders, welcher gerade bzw. senkrecht ausgebildet sein kann, angesehen werden kann.

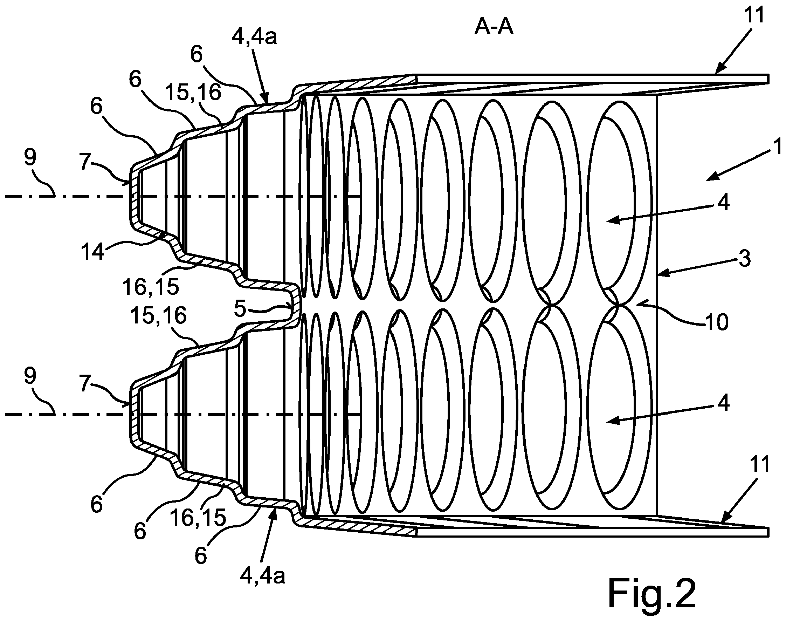

Fig. 2 zeigt in einer perspektivischen und geschnittenen Ansicht die Crashstruktur 1, wobei eine Schnittebene A-A in Fig. 1 eingezeichnet ist. Es ist zu erkennen, dass die Verformungseinheiten 4, insbesondere die Verformungseinheiten 4a, die Verformungselemente 6 aufweisen, welche jeweils entlang einer Längsmittenachse 9 der Verformungseinheit 4, 4a koaxial zueinander angeordnet sind. Ferner ist in Fig. 2 besonders gut zu erkennen, dass die Verformungseinheiten 4, 4a, 4b jeweils zusammen mit dem Trägerkörper 3 einstückig ausgebildet sind, wodurch die Crashstruktur 1 gebildet ist. Hierbei sind die Verformungseinheiten 4 bei Betrachtung einer der Trägerfläche 5 gegenüberliegenden Innenfläche 10 des Trägerkörpers 3 jeweils als eine konkave Materialausdehnung des Trägerkörpers 3 gebildet sind, wobei bei Betrachtung der Trägerfläche 5 die Verformungseinheiten 4 jeweils als eine konvexe Materialausdehnung des Trägerkörpers 3 gebildet sind.

Die Crashstruktur 1 kann wenigstens eine laterale Lasche 11, im vorliegenden Beispiel zwei laterale Laschen 11, aufweisen. Bei erneuter Betrachtung der Fig. 1 ist zu erkennen, dass die jeweilige laterale Lasche 11 eine Befestigungseinrichtung 12 umfassen kann, welche mehrere, die jeweilige laterale Lasche 11 vollständig durchdringende Durchgangsöffnungen 13 aufweisen kann. Beispielsweise kann es sich bei den Durchgangsöffnungen 13 jeweils um ein Langloch handeln, durch welches hindurch Befestigungselement, zum Beispiel eine Schraube, eine Niete etc., anordenbar ist, sodass auf an sich bekannte Weise die Crashstruktur 1 besonders einfach an einer Trägerstruktur und/oder einem sonstigen Bauteil des Kraftfahrzeugs 2 befestigbar ist.

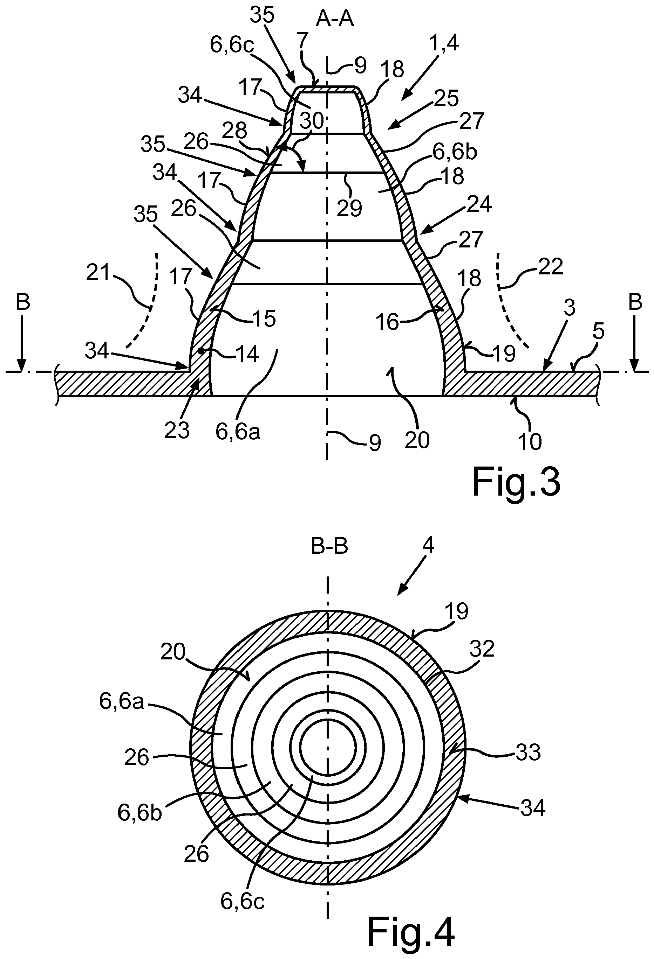

Für die Erfindung wesentlich ist, dass in einem Längsschnitt 14 das jeweilige Verformungselement 6 jeweils zwei einander gegenüberliegende Längsschnittflächen 15 und 16 aufweist, die jeweils einer ungeraden Kurve 17, 18 (erstmals gezeigt in Fig. 3) folgen.

Fig. 3 zeigt in einer Längsschnittansicht entlang der Schnittebene A-A (siehe Fig. 1) eine der Verformungseinheiten 4. Es ist besonders gut zu erkennen, dass eine Außenumfangsfläche 19 des jeweiligen Verformungselements 6 in der Schnittansicht der Fig. 3 entlang der Längsmittenachse 9 einer jeweiligen der beiden Kurven 17, 18 folgt. Hierbei sind die Kurven 17, 18 jeweils unterschiedlich von einer Geraden ausgebildet. Insbesondere kann eine mathematische, die jeweilige Kurve 17, 18 beschreibende Funktion gemäß einer Formel

$$z = x^2 - y^2 \qquad\qquad F1$$

oder

$$x = y \cdot z \qquad\qquad F2$$

ausgebildet sein. Es versteht sich von selbst, dass die Formeln F1, F2 parametrisierbar sind, indem die Variablen an einer Stelle oder mehreren Stellen mathematisch mit einem Parameter oder mehreren Parametern verknüpft werden. Somit kann die jeweilige Kurve 17, 18 zum Beispiel als ein Hyperbelast ausgebildet sein.

Die Kurve 17 und die Kurve 18 können jeweilige Äste einer gemeinsamen Hyperbel sein, wobei die beiden Äste separat für sich so gegeneinander verschoben und/oder verdreht sind, dass bei einer Betrachtung einer Innenumfangsfläche 20 des entsprechenden Verformungselements 6 diese entlang deren Innenumfangsrichtung konkav ausgebildet ist. Ferner können die beiden Kurven 17, 18 jeweils zu einer eigenen Hyperbel gehören, wobei zum besseren Verständnis eine zu der Kurve 17 gehörende Hyperbel 21 und eine zu der Kurve 18 gehörende Hyperbel 22 teilweise in Fig. 3 abgebildet sind.

In Fig. 3 ist des Weiteren gezeigt, dass ein direkt an die Trägerfläche 5 angrenzendes Verformungselement 6a in dessen Anschlussbereich 23 mit dem Trägerkörper 3 verbunden ist. Ferner weist das sich an das Verformungselement 6a anschließende Verformungselement 6b einen Anschlussbereich 24 auf, über welchen das Verformungselement 6b mit dem Verformungselement 6a verbunden ist. In analoger Weise weist das sich an das Verformungselement 6b anschließende Verformungselement 6c einen Anschlussbereich 25 auf, über welchen das Verformungselement 6c mit dem Verformungselement 6b verbunden ist.

Im vorliegenden Beispiel ist vorgesehen, dass zwischen dem Verformungselement 6a und dem Verformungselement 6b sowie zwischen dem Verformungselement 6b und dem Verformungselement 6c jeweils ein Verbindungselement 26 angeordnet ist, welches in dem jeweiligen Anschlussbereich 24, 25 angeordnet ist und/oder den jeweiligen Anschlussbereich 24, 25 zumindest teilweise bildet. Mit anderen Worten sind das Verformungselement 6a und das Verformungselement 6b sowie das Verformungselement 6b und das Verformungselement 6c über ein jeweiliges Verbindungselement 26 miteinander verbunden. Es ist insbesondere vorgesehen, dass die Verformungselemente 6a, 6b, 6c, die Verbindungselemente 26 und die Aufprallfläche 7 zusammen mit dem Trägerkörper 3, beispielsweise mittels eines Tiefziehens, miteinander ausgebildet sind, sodass die jeweilige Verformungseinheit 4 bzw. die Crashstruktur 1 gebildet ist.

In dem in Fig. 3 gezeigten Längsschnitt der Verformungseinheit 4 und infolgedessen des jeweiligen Verbindungselements 26 ist zu erkennen, dass eine Außenkontur 27 des jeweiligen Verbindungselements 26 zumindest im Wesentlichen als ein Kegelstumpf ausgebildet ist. Hierbei können eine Mantelfläche 28 des Kegelstumpfs und eine Parallele 29 zur Trägerfläche 5 bzw. zum Trägerkörper 5 miteinander einen vorgegebenen Winkel 30 bilden. Der Winkel 30 beträgt besonders bevorzugt 3 Grad, obwohl die Abbildung der Verformungseinheit 4 in Fig. 3 aufgrund einer besseren Darstellbarkeit nicht winkeltreu ist. In Einbaulage der Crashstruktur 1 können die Längsmittenachse 9 der Verformungseinheit 4 und eine Fahrzeuglängsrichtung 31 (siehe Fig. 6) miteinander zusammenfallen, sodass es sich bei der Parallelen 29 um eine Vertikale handeln kann.

Fig. 4 zeigt eine entlang einer in Fig. 3 gezeigten Schnittebene B-B geschnittene Teilansicht der Crashstruktur 1 mit Blick in ein Inneres der Verformungseinheit 4, wobei sich die dargestellte Verformungseinheit 4 in die Zeichnungsebene hinein erstreckt. Der dort gezeigte Querschnitt der Verformungseinheit 4 folgt einem Oval 32, welches im vorliegenden Beispiel als ein Kreis ausgebildet ist. Es ergibt sich somit, insbesondere bei einer Zusammenschau der Fig. 4 mit der Fig. 3, dass die Innenumfangsfläche 20 des jeweiligen Verformungselements 6 doppelt gekrümmt ist. Dies gilt in analoger Weise auch für die Außenumfangsfläche 19 des jeweiligen Verformungselements 6. Im vorliegenden Beispiel weisen also die jeweiligen Verformungselemente 6 sowie die Verbindungselemente 26 jeweils eine kreisringförmige Querschnittsfläche 33 auf, welche stellvertretend für die Verformungselemente 6 und für die Verbindungselemente 26 am Verformungselement 6a dargestellt ist.

Unter erneuter Bezugnahme auf die Fig. 3 ist klar ersichtlich, dass das jeweilige Verformungselement 6 einen proximalen Bereich 34 und einen distalen Bereich 35 aufweist. Die positionellen Angaben (proximal/distal) der beiden Bereiche 34, 35 sind jeweils auf den Trägerkörper 3 bzw. auf die Trägerfläche 5 bezogen. Das bedeutet, dass ein jeweiliger proximaler Bereich 34 näher an dem Trägerkörper 3 bzw. an der Trägerfläche 5 angeordnet ist als der entsprechende distale Bereich 35 desselben Verformungselements 6. Besonders deutlich ist bei einer Zusammenschau der Fig. 3 mit der Fig. 4 zu erkennen, dass die jeweiligen Verformungselemente 6 an dem jeweiligen proximalen Bereich 34 größer ausgebildet sind als in dem jeweiligen distalen Bereich 35. Genauer gesagt schließt das jeweilige Verformungselement 6 an dessen nahe der Trägerfläche 3 angeordneten, proximalen Bereich 34 eine größere Fläche ein als in dem jeweiligen, fern der Trägerfläche 5 angeordneten, distalen Bereich 35. Im vorliegenden Beispiel ist die jeweilige, von dem jeweiligen Verformungselement 6 eingeschlossene Fläche als eine Kreisscheibe ausgebildet. Infolgedessen kann sich eine Außenkontur für das jeweilige Verformungselement 6 ergeben, welche als Eiform bezeichnet werden kann. Das bedeutet, dass sich das jeweilige Verformungselement entlang der Längsmittenachse 9 in Richtung weg von der Trägerfläche 5 verjüngt, wobei die eingeschlossene Fläche bzw. Kreisscheibe zwischen dem proximalen Bereich 34 und dem distalen Bereich 35 des betrachteten Verformungselements 6 größer ausgebildet sein kann als an den Bereichen 34, 35. Mit anderen Worten kann sich das jeweilige Verformungselement 6 entlang der Längsmittenachse 9 in Richtung von der Trägerfläche 5 weg zunächst genau einmal erweitern, um sich in weiterer Entfernung von der Trägerfläche 5 auf die am distalen Bereich 35 eingeschlossene Kreisscheibe zu verjüngen.

Am jeweiligen distalen Bereich 35 des jeweiligen Verformungselements 6 ist vorliegend direkt eines der Verbindungselemente 26 oder die Aufprallfläche 7 angeordnet. Bei den Verformungselementen 6a, 6b ist an deren jeweiligem distalen Bereich 35 der entsprechende Anschlussbereich 24, 25 angeordnet, welcher durch das jeweilige Verbindungselement 26 gebildet sein kann. Es ist des Weiteren klar zu erkennen, dass bei einem Paar von Verformungselementen 6 zum Beispiel die Verformungselemente 6a, 6b das weiter von der Trägerfläche 5 entfernte Verformungselemente 6, zum Beispiel das Verformungselement 6b, einen proximalen Bereich 34 aufweist, welcher kleiner ist als ein distaler Bereich 35 des näher an der Trägerfläche 5 angeordneten Verformungselements 6, zum Beispiel des Verformungselements 6a.

Bei Betrachtung eines Paares bzw. einer Gruppierung von Verformungselementen 6, zum Beispiel den Verformungselementen 6a, 6b, 6c, ist an dem distalen Bereich 35 des am weitesten von der Trägerfläche 5 beabstandeten Verformungselements 6 die Aufprallfläche 7 angeordnet, insbesondere einstückig mit dem entsprechenden Verformungselement 6, 6c ausgebildet. Die Aufprallfläche 7 kann zumindest im Wesentlichen parallel zu dem Trägerkörper 3 bzw. zu der Trägerfläche 5 angeordnet sein. Es ist jedoch auch denkbar, dass eine jeweilige Aufprallfläche 7 der entsprechenden Verformungseinheit 4 schräg zu dem Trägerkörper 3 bzw. zu der Trägerfläche 5 angeordnet sein kann. Dies ist in Fig. 5 dargestellt, welche eine perspektivische und entlang der in Fig. 1 gezeigten Schnittebene A-A geschnittene Ansicht der Crashstruktur 1 zeigt. Mittels einer derartige geometrischen Auslegung der Crashstruktur 1 ist einem Gedanken an einen besonders effizienten Fußgängerschutz in besonderer Weise Rechnung getragen, da bei einem Aufprall des Kraftfahrzeugs 2 auf einen Unfallgegner die Crashstruktur 1 an eine Kontaktfläche des Unfallgegners, insbesondere an eine räumliche Ausdehnung des Unfallgegners, angepasst ist, wodurch in besonders vorteilhafter Weise der Unfallgegner von der Crashstruktur 1 aufgefangen wird, wodurch eine Verletzungsschwere bei dem Unfall für den Unfallgegner besonders gering ist.

Im Vergleich zu den bisher beschriebenen Ausführungen der Crashstruktur 1 zeigt die in Fig. 5 abgebildete Crashstruktur 1 für eine jeweilige Verformungseinheit 4 zwar lediglich jeweils ein Verformungselement 6, doch die spezifische positionelle Ausbildung der jeweiligen Aufprallflächen 7 ist ohne Weiteres auf Verformungseinheiten 4 übertragbar, welche mehr als ein Verformungselement 6 aufweisen.

Es ist des Weiteren in Fig. 5 zu erkennen, dass die jeweilige Aufprallfläche 7, insbesondere an deren der Trägerfläche 5 abgewandten Außenseite eine Rundung aufweisen kann, um die Aufprallfläche 7 noch besser an die Außenkontur des Unfallgegners anlegen zu können.

Fig. 6 zeigt in einer schematischen Darstellung das Kraftfahrzeug 2, welches mit einer Crashstruktur 1 oder mehreren Crashstrukturen 1 ausgestattet ist. Es ist insbesondere von Vorteil, wenn Bereiche des Kraftfahrzeugs 2, insbesondere entlang dessen Außenkontur, mit einer Crashstruktur 1 oder mehreren Crashstrukturen 1 ausgerüstet werden, auf welche mit besonders hoher Wahrscheinlichkeit der Unfallgegner, insbesondere ein Kopf, ein Torso und/oder wenigstens eine Extremität des Unfallgegners, aufschlagen. Dementsprechend kann vorgesehen sein, dass ein vorderer Stoßfänger 36, ein hinterer Stoßfänger 37 und/oder seitliche Stoßfänger 38 zumindest teilweise durch eine jeweilige Crashstruktur 1 oder mehrere Crashstrukturen 1 gebildet ist/sind. Insbesondere bei einem Unfall des Kraftfahrzeugs 2 mit einem Fußgänger kann es besonders vorteilhaft sein, wenn eine Klappe 39, insbesondere ein Motorraumdeckel, ein Heckdeckel etc., mit einer Crashstruktur 1 oder mehreren Crashstrukturen 1 ausgerüstet ist. Sollte der Fußgänger oder ein seitlich auf das Kraftfahrzeug 2 aufschlagender Zweiradfahrer aufgrund des Unfalls auf ein Dach 40 des Kraftfahrzeugs 2 aufgehoben werden und dort aufschlagen, kann eine hieraus resultierende Verletzungsschwere mittels eines mit einer Crashstruktur 1 oder mehreren Crashstrukturen 1 ausgerüsteten Dachs 40 besonders gering gehalten werden. Es kann insbesondere vorgesehen sein, dass die einzelnen Verformungselemente 6 bzw. die einzelnen Verformungseinheiten 4, 4a so angeordnet sind, dass die jeweilige Aufprallfläche 7 dem potentiellen Unfallgegner zugewandt ist. Alternativ oder zusätzlich können Verformungselemente 6 bzw. Verformungseinheiten 4, 4a vorgesehen sein, die derart angeordnet sind, dass die entsprechende Aufprallfläche 7 von dem potentiellen Unfallgegner abgewandt ist. Beispielsweise kann sich eine jeweilige Aufprallfläche 7 an einer tragenden Struktur des Kraftfahrzeugs 2 abstützen. Insbesondere können die Verformungselemente 6 der Crashstruktur 1 in einer gemeinsamen Richtung von dem gemeinsamen Trägerkörper 3 hervorspringen.

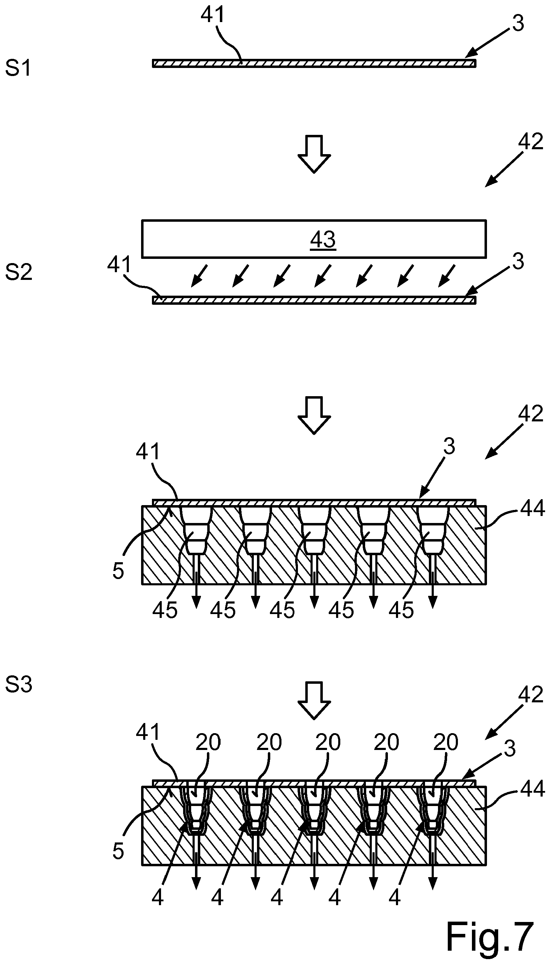

Fig. 7 zeigt in schematischer Darstellung einen Ablauf eines Verfahrens zum Herstellen der Crashstruktur 1. Hierbei wird in einem ersten Verfahrensschritt S1 der Trägerkörper 3 bereitgestellt, welcher in unverformtem Zustand zumindest einen flachen Anteil 41 aufweist oder - zumindest im Wesentlichen oder vollständig - flach, insbesondere quaderförmig ausgebildet ist. Hierbei kann der Trägerkörper 3 als Plattenware bereitgestellt werden, wie es auch in Fig. 7 dargestellt ist. Es ist aber auch denkbar, dass der Trägerkörper 3 als Rollenware bereitgestellt wird. Vor einem weiteren Verfahrensschritt kann vorgesehen sein, dass der noch nicht verformte Trägerkörper 3 bezüglich seiner Längs- und/oder Querausdehnung zugerichtet, zum Beispiel geschnitten wird.

In einem weiteren, zum Beispiel zweiten Verfahrensschritt S2 wird der zumindest im Wesentlichen vollständig quaderförmige Trägerkörper 3 bzw. der flache bzw. vollständig quaderförmige Anteil 41 des Trägerkörpers 3 einem Umformwerkzeug 42 breitgestellt oder zugeführt, welches eine Heizeinrichtung 43 umfasst. Mittels der Heizeinrichtung 43 wird dann zumindest der flache Anteil 41 des Trägerkörpers 3 erwärmt. Insbesondere wird der flache Anteil 41 des Trägerkörpers 3 mittels der Heizeinrichtung 43 bis auf eine Umformtemperatur erwärmt, bei welcher der Trägerkörper 3 besonders effizient umformbar ist. Daher ist es von besonderen Vorteil, wenn der Trägerkörper 3 zumindest im Wesentlichen aus einem Thermoplast hergestellt ist, welches sich bei der Umformtemperatur thermoplastisch verformen lässt.

In einem weiteren Schritt S3 wird der erwärmte Trägerkörper 3 in Überdeckung mit einer Negativform 44 des Umformwerkzeugs 42 gebracht. Hierbei folgt eine Innenumfangskontur 45 der Negativform 44 zumindest im Wesentlichen einer Außenkontur der wenigstens einen, an dem Trägerkörper 3 anzuformenden Verformungseinheit 4. Insbesondere kann die Negativform 44 dazu ausgebildet sein, mehrere Verformungseinheiten 4 gleichzeitig auszubilden. Besonders bevorzugt wird der erwärmte Trägerkörper 3 derart in Zusammenwirkung mit der Negativform 44 gebracht, dass ein Ein- und/oder Ausströmen eines Gases, insbesondere Luft, über eine Berührungsfläche zwischen dem Trägerkörper 3 und der Negativform 44 zumindest im Wesentlichen ausgeschlossen ist.

Es wird dann zwischen dem flachen Anteil 41 des erwärmten Trägerkörpers 3 und der Negativform 44 des Umformwerkzeugs 42 mittels einer nicht abgebildeten Vakuumeinrichtung des Umformwerkzeugs 42 ein Unterdruck erzeugt. Hierdurch werden direkt an die Innenumfangskontur 45 angrenzende Anteile des erwärmten und infolgedessen thermoplastisch verformbaren Trägerkörpers 3 in die Negativform 44 eingesaugt. Dementsprechend wird bei diesem Verfahrensschritt die Crashstruktur 1 hergestellt, indem sich ein Material des Trägerkörpers 3, insbesondere das Thermoplast, an die Innenumfangskonturen 45 der Negativform 44 anlegt. Hiernach weist der so verformte Trägerkörper 3 den flachen Anteil 41 auf, welcher von den vakuumgeformten Verformungseinheiten 4 unterbrochen ist. Dementsprechend sind der Trägerkörper 3 und die jeweiligen Verformungseinheiten 4 miteinander einstückig ausgebildet. Auf diese Weise ist ein besonders einfaches Verfahren zum Herstellen der Crashstruktur 1 bereitgestellt, wobei die Crashstruktur 1 besonders materialeffizient herstellbar ist, da eine spanende Bearbeitung des Trägerkörpers 3 vollständig entfällt.

Teil des Herstellungsverfahrens kann es darüber hinaus sein, dass die lateralen Laschen 11 mit dem Trägerkörper 3 verbunden werden oder, ähnlich wie die jeweiligen Verformungseinheiten 4, einstückig zusammen mit dem Trägerkörper 3 ausgebildet werden.

Insgesamt zeigt die Erfindung, wie die Aufprallenergie zwischen dem in einen Unfall verwickelten Kraftfahrzeug 2 und dem Unfallgegner auf besonders vorteilhafte Art und Weise in eine Verformungsenergie mittels der besonders einfach herstellbaren Crashstruktur 1 umzuwandeln ist. Besonderes Augenmerk liegt hierbei auf dem Schutz von Fußgängern, welche üblicherweise in Unfälle mit Kraftfahrzeugen verwickelt werden, wobei das Kraftfahrzeug eine besonders niedrige Geschwindigkeit, insbesondere weniger als 50 Kilometer pro Stunde innehat.

Die aus einem Thermoplast, insbesondere Polypropylen, hergestellte Crashstruktur 1 weist einen besonders vorteilhaften Widerstand gegen einen Aufschlag bei einer hohen Biegezugfestigkeit auf, da das Polypropylen eine entsprechend kristalline Gitterstruktur aufweist.

Aufgrund des zumindest teilweise hyperbolisch und paraboloid ausgebildeten Querschnitts der jeweiligen Verformungseinheiten 4, welcher jeweils zumindest teilweise durch die Formen F1 und/oder F2 definiert ist, ergibt sich eine doppelte Krümmung für jedes einzelne der Verformungselemente 6 der jeweiligen Verformungseinheiten 4. Aufgrund dessen ist die Crashstruktur 1 besonders masseeffizient herstellbar, wobei diese hocheffizient bei einem Aufprall eines Unfallgegners auf die Crashstruktur 1 wirkt.

Mittels des bereitgestellten Herstellungsverfahrens ist die Crashstruktur 1 besonders einfach und/oder aufwandsarm, insbesondere kosteneffizient herzustellen, indem ein Vakuum-Thermoformen-Prozess eingesetzt ist.

Ein weiterer Kerngedanke der vorliegenden Erfindung ist ein gestufter hyperbolischer und paraboloidischer Querschnitt, welcher im vorliegenden Beispiel dreistufig ausgebildet ist. Hierdurch ist gewährleistet, dass die jeweilige Verformungseinheit 4 der Crashstruktur 1 mehrfach, insbesondere dreifach kollabierbar ausgebildet ist, wobei beispielsweise eine erste Stufe lediglich dann aufgrund der Aufprallenergie kollabiert wird, wenn die Aufprallenergie besonders gering ausgebildet ist. Überschreitet die Aufprallenergie ein gewisses Maß, so kann vorgesehen sein, dass alternativ oder zusätzlich zu der ersten Stufe die zweite und/oder die dritte Stufe der entsprechenden Verformungseinheit 4 mittels der Aufprallenergie kollabiert wird.

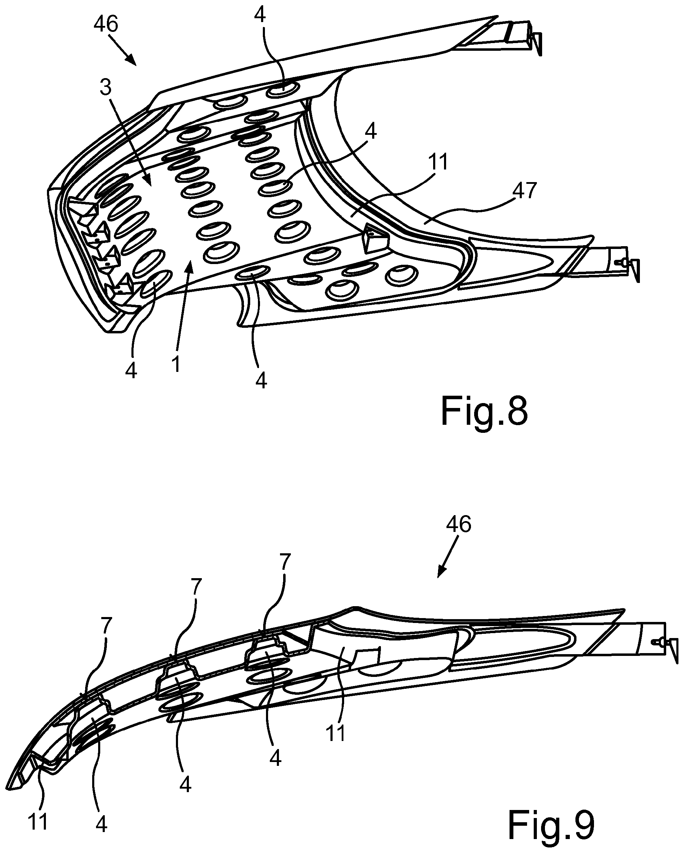

Fig. 8 zeigt eine perspektivische Darstellung einer Klappe 46, zum Beispiel eines Motorraumdeckels, des Kraftfahrzeugs 2. Gut zu erkennen ist die Crashstruktur 1, die über deren seitliche Laschen 11 mit einer Innenseite 47 des Motorraumdeckels 46 verklebt ist. Ferner ist zu erkennen, dass sich die einzelnen Verformungseinheiten 4, 4a (von denen in Fig. 8 aus Übersichtsgründen nur einige mit dem entsprechenden Bezugszeichen versehen sind) ausgehend vom Trägerkörper 3 in Richtung hin zu der Innenseite 47 der Klappe 46 erstrecken. Mit anderen Worten sind die Verformungseinheiten 4, 4a zwischen dem Trägerkörper 3 und der Innenseite 47 angeordnet.

Fig. 9 zeigt eine Schnittansicht entlang einer die Klappe 46 senkrecht schneidenden Längsschnittebene. In dieser Schnittansicht ist einfach zu erkennen, dass sich die einzelnen Verformungseinheiten 4, 4a über die jeweilige Aufprallfläche 7 an der Innenseite 47 der Klappe 46 abstützen.

Bezugszeichenliste

| | | | |
|---|---|---|---|
| 1 | Crashstruktur | 27 | Außenkontur |
| 2 | Kraftfahrzeug | 28 | Mantelfläche |
| 3 | Trägerkörper | 29 | Parallele |
| 4 | Verformungseinheit | 30 | Winkel |
| 4a | Verformungseinheit | 31 | Fahrzeuglängsrichtung |
| 4b | Verformungseinheit | 32 | Oval |

(fortgesetzt)

| 5 | Trägerfläche | 33 | Querschnittsfläche |
|---|---|---|---|
| 6 | Verformungselement | 34 | proximaler Bereich |
| 6a | Verformungselement | 35 | distaler Bereich |
| 6b | Verformungselement | 36 | Stoßfänger |
| 6c | Verformungselement | 37 | Stoßfänger |
| 7 | Aufprallfläche | 38 | Stoßfänger |
| 8 | Radius | 39 | Klappe |
| 9 | Längsmittenachse | 40 | Dach |
| 10 | Innenfläche | 41 | Anteil |
| 11 | Lasche | 42 | Umformwerkzeug |
| 12 | Befestigungseinrichtung | 43 | Heizeinrichtung |
| 13 | Durchgangsöffnungen | 44 | Negativform |
| 14 | Längsschnitt | 45 | Innenumfangskontur |
| 15 | Längsschnittfläche | 46 | Klappe |
| 16 | Längsschnittfläche | 47 | Innenseite |
| 17 | Kurve | | |
| 18 | Kurve | F1 | mathematische Formel |
| 19 | Außenumfangsfläche | F2 | mathematische Formel |
| 20 | Innenumfangsfläche | | |
| 21 | Hyperbel | S1 | Verfahrensschritt |
| 22 | Hyperbel | S2 | Verfahrensschritt |
| 23 | Anschlussbereich | S3 | Verfahrensschritt |
| 24 | Anschlussbereich | | |
| 25 | Anschlussbereich | | |
| 26 | Verbindungselement | | |

## Patentansprüche

1. Crashstruktur (1) für ein Kraftfahrzeug (2) mit einem Trägerkörper (3), von dessen Trägerfläche (5) wenigstens eine mit dem Trägerkörper (3) einstückig ausgebildete Verformungseinheit (4, 4a, 4b) hervorspringt, die durch wenigstens zwei übereinander angeordnete und miteinander verbundene Verformungselemente (6, 6a, 6b, 6c) und eine Aufprallfläche (7) gebildet ist, wobei ein Längsschnitt (14) des jeweiligen Verformungselements (6, 6a, 6b, 6c) zwei einander gegenüberliegende, einer jeweiligen ungeraden Kurve (17, 18) folgende Längsschnittflächen (15, 16) aufweist, wobei die Aufprallfläche (7) über die Verformungselemente (6, 6a, 6b, 6c) von der Trägerfläche (5) beabstandet ist,
**dadurch gekennzeichnet, dass**
die jeweilige ungerade Kurve (17, 18) ein Hyperbelast ist.

2. Crashstruktur (1) nach Anspruch 1,
**dadurch gekennzeichnet, dass**
ein Querschnitt des jeweiligen Verformungselements (6, 6a, 6b, 6c) eine einem Oval (32) folgende Querschnittsfläche (33) aufweist.

3. Crashstruktur (1) nach einem der vorhergehenden Ansprüche,
**dadurch gekennzeichnet, dass**
die beiden Verformungselemente (6, 6a, 6b, 6c) in einem jeweiligen, nah der Trägerfläche (5) angeordneten, proximalen Bereich (34) entlang einer jeweiligen Innenumfangsrichtung eine größere Fläche einschließen als in einem jeweiligen, fern der Trägerfläche (5) angeordneten, distalen Bereich (35).

4. Crashstruktur (1) nach einem der vorhergehenden Ansprüche,
**gekennzeichnet durch**
ein zwischen den beiden Verformungselementen (6, 6a, 6b, 6c) angeordnetes Verbindungselement (26), über welches die beiden Verformungselemente (6, 6a, 6b, 6c) miteinander verbunden sind.

**5.** Crashstruktur (1) nach Anspruch 4,
**dadurch gekennzeichnet, dass**
eine Außenkontur (27) des Verbindungselements (26) zumindest im Wesentlichen als ein Kegelstumpf ausgebildet ist, dessen Mantelfläche (28) mit einer Parallelen (29) zur Trägerfläche (5) einen vorgegebenen Winkel (30) bildet.

**6.** Crashstruktur (1) nach einem der vorhergehenden Ansprüche,
**dadurch gekennzeichnet, dass**
die Aufprallfläche (7) und die Trägerfläche (5) zueinander schräg angeordnet sind.

**7.** Crashstruktur (1) nach einem der Ansprüche 1 bis 5,
**dadurch gekennzeichnet, dass**
die Aufprallfläche (7) und die Trägerfläche zueinander parallel angeordnet sind.

**8.** Crashstruktur (1) nach einem der vorhergehenden Ansprüche,
**gekennzeichnet durch**
zumindest eine weitere Verformungseinheit (4, 4a, 4b), wobei die erste und die weitere Verformungseinheit (4, 4a, 4b) entlang der Trägerfläche (5) übereinander und/oder nebeneinander angeordnet sind.

**9.** Crashstruktur (1) nach einem der vorhergehenden Ansprüche,
**dadurch gekennzeichnet, dass**
der Trägerkörper (3) wenigstens eine laterale Lasche (11) aufweist, über welche die Crashstruktur (1) in das Kraftfahrzeug (2) integrierbar ist.

**10.** Kraftfahrzeug (2) mit einer nach einem der vorhergehenden Ansprüche ausgebildeten Crashstruktur (1), mittels welcher eine Aufprallenergie unter einem Verformen wenigstens eines der beiden Verformungselemente (6, 6a, 6b, 6c) zumindest größtenteils in eine Verformungsenergie umwandelbar ist.

**11.** Kraftfahrzeug (2) nach Anspruch 10,
**gekennzeichnet durch**
wenigstens einen Stoßfänger (36, 37, 38), welcher zumindest teilweise durch die Crashstruktur (1) gebildet ist.

**12.** Verfahren zum Herstellen einer nach einem der Ansprüche 1 bis 9 ausgebildeten Crashstruktur (1), mit den Schritten

- Bereitstellen des einen flachen Anteil (41) aufweisenden Trägerkörpers (3);
- Erwärmen zumindest des flachen Anteils (41) des Trägerkörpers (3) mittels einer Heizeinrichtung (43) eines Umformwerkzeugs (42); und
- Erzeugen eines Unterdrucks zwischen dem flachen Anteil (41) des Trägerkörpers (3) und einer Negativform (44) des Umformwerkzeugs (42) der wenigstens einen Verformungseinheit (4, 4a, 4b) mittels einer Vakuumeinrichtung des Umformwerkzeugs (42), wodurch ein Material des flachen Anteils (41) an eine Innenkontur der Negativform (44) angelegt und infolgedessen die wenigstens eine Verformungseinheit (4, 4a, 4b) an dem Trägerkörper (3) ausgeformt wird.

**Claims**

**1.** Crash structure (1) for a motor vehicle (2), comprising a carrier body (3), from the carrier surface (5) of which at least one deformation unit (4, 4a, 4b) formed integrally with the carrier body (3) protrudes, which deformation unit is formed by at least two deformation elements (6, 6a, 6b, 6c), which are arranged one above the other and are connected to one another, and by an impact surface (7), wherein a longitudinal section (14) of each deformation element (6, 6a, 6b, 6c) has two longitudinal sectional surfaces (15, 16) lying opposite one another and following respective non-straight curves (17, 18), wherein the impact surface (7) is spaced apart from the carrier surface (5) by the deformation elements (6, 6a, 6b, 6c),
**characterised in that**
each non-straight curve (17, 18) is a branch of a hyperbola.

**2.** Crash structure (1) according to claim 1,
**characterised in that**
a cross-section of the deformation element (6, 6a, 6b, 6c) in question has a cross-sectional surface (33) following an oval (32).

3. Crash structure (1) according to any of the preceding claims,
   **characterised in that**
   in a particular proximal region (34) arranged close to the carrier surface (5), the two deformation elements (6, 6a, 6b, 6c) enclose a larger surface in a particular inner peripheral direction than in a particular distal region (35) arranged remote from the carrier surface (5).

4. Crash structure (1) according to any of the preceding claims,
   **characterised by**
   a connection element (26) which is arranged between the two deformation elements (6, 6a, 6b, 6c) and by means of which the two deformation elements (6, 6a, 6b, 6c) are connected to one another.

5. Crash structure (1) according to claim 4,
   **characterised in that**
   an outer contour (27) of the connection element (26) is designed at least substantially as a truncated cone, the peripheral surface (28) of which forms a predetermined angle (30) with a line parallel (29) to the carrier surface (5).

6. Crash structure (1) according to any of the preceding claims,
   **characterised in that**
   the impact surface (7) and the carrier surface (5) are arranged obliquely with respect to one another.

7. Crash structure (1) according to any of claims 1 to 5,
   **characterised in that**
   the impact surface (7) and the carrier surface are arranged parallel to one another.

8. Crash structure (1) according to any of the preceding claims,
   **characterised by**
   at least one further deformation unit (4, 4a, 4b), whereby the first and the further deformation unit (4, 4a, 4b) are arranged one above the other and/or next to one another along the carrier surface (5).

9. Crash structure (1) according to any of the preceding claims,
   **characterised in that**
   the carrier body (3) has at least one lateral tab (11), by means of which the crash structure (1) can be integrated into the motor vehicle (2).

10. Motor vehicle (2) comprising a crash structure (1) designed according to any of the preceding claims, by means of which impact energy can be converted, at least for the most part, into deformation energy by deforming at least one of the two deformation elements (6, 6a, 6b, 6c).

11. Motor vehicle (2) according to claim 10,
    **characterised by**
    at least one bumper (36, 37, 38) which is formed at least partially by the crash structure (1).

12. Method for producing a crash structure (1) designed according to any of claims 1 to 9, comprising the following steps:

    - providing the carrier body (3) having a flat portion (41);
    - heating at least the flat portion (41) of the carrier body (3) by means of a heating device (43) of a forming tool (42); and
    - generating a negative pressure between the flat portion (41) of the carrier body (3) and a negative mould (44) of the forming tool (42) of the at least one deformation unit (4, 4a, 4b) by means of a vacuum device of the forming tool (42), whereby a material of the flat portion (41) is applied to an inner contour of the negative mould (44) and as a result the at least one deformation unit (4, 4a, 4b) is formed on the carrier body (3).

**Revendications**

1. Structure anticollision (1) pour un véhicule automobile (2) avec un corps de support (3) de la surface de support (5) duquel au moins une unité de déformation (4, 4a, 4b) réalisée d'un seul tenant avec le corps de support (3) fait saillie, qui est formée par au moins deux éléments de déformation (6, 6a, 6b, 6c) disposés de manière superposée et reliés l'un à l'autre et une surface d'impact (7), dans laquelle une coupe longitudinale (14) de l'élément de déformation (6, 6a, 6b, 6c) respectif comporte deux surfaces de coupe longitudinale (15, 16) opposées l'une à l'autre, suivant une courbe (17, 18) respective non rectiligne, dans laquelle la surface d'impact (7) est tenue à distance de la surface de support (5) par l'intermédiaire des éléments de déformation (6, 6a, 6b, 6c),
**caractérisée en ce que**
la courbe respective non rectiligne (17, 18) est une hypercharge.

2. Structure anticollision (1) selon la revendication 1,
**caractérisée en ce que**
une section transversale de l'élément de déformation respectif (6, 6a, 6b, 6c) présente une surface de section transversale (33) suivant un ovale (32).

3. Structure anticollision (1) selon l'une quelconque des revendications précédentes,
**caractérisée en ce que**
les deux éléments de déformation (6, 6a, 6b, 6c) incluent dans une zone proximale (34) respective, disposée à proximité de la surface de support (5) le long d'une direction périphérique intérieure respective, une surface plus grande que dans une zone (35) distale respective, disposée loin de la surface de support (5).

4. Structure anticollision (1) selon l'une quelconque des revendications précédentes,
**caractérisée par**
un élément de liaison (26) disposé entre les deux éléments de déformation (6, 6a, 6b, 6c), par l'intermédiaire duquel les deux éléments de déformation (6, 6a, 6b, 6c) sont reliés l'un à l'autre.

5. Structure anticollision (1) selon la revendication 4,
**caractérisée en ce que**
un contour extérieur (27) de l'élément de liaison (26) est conçu au moins sensiblement comme un cône tronqué dont la surface de revêtement (28) forme avec une parallèle (29) à la surface de support (5) un angle prédéterminé (30).

6. Structure anticollision (1) selon l'une quelconque des revendications précédentes,
**caractérisée en ce que**
la surface d'impact (7) et la surface de support (5) sont disposées perpendiculairement l'une à l'autre.

7. Structure anticollision (1) selon l'une quelconque des revendications 1 à 5,
**caractérisée en ce que**
la surface d'impact (7) et la surface de support sont disposées parallèlement l'une à l'autre.

8. Structure anticollision (1) selon l'une quelconque des revendications précédentes,
**caractérisée par**
au moins une autre unité de déformation (4, 4a, 4b), dans laquelle la première et l'autre unité de déformation (4, 4a, 4b) sont disposées l'une sur l'autre et/ou côte à côte le long de la surface de support (5).

9. Structure anticollision (1) selon l'une quelconque des revendications précédentes,
**caractérisée en ce que**
le corps de support (3) présente au moins une patte latérale (11) par l'intermédiaire de laquelle la structure anticollision (1) peut être intégrée dans le véhicule automobile (2).

10. Véhicule automobile (2) avec une structure anticollision (1) conçue selon l'une quelconque des revendications précédentes, au moyen de laquelle une énergie d'impact peut être transformée par une déformation d'au moins l'un des deux éléments de déformation (6, 6a, 6b, 6c) au moins en grande partie en une énergie de déformation.

11. Véhicule automobile (2) selon la revendication 10,
**caractérisé par**
au moins un pare-chocs (36, 37, 38) qui est formé au moins partiellement par la structure anticollision (1).

12. Procédé de fabrication d'une structure anticollision (1) selon l'une quelconque des revendications 1 à 9, comportant les étapes suivantes

- mise à disposition du corps de support (3) présentant une partie plane (41) ;
- chauffage d'au moins la partie plane (41) du corps de support (3) au moyen d'un système de chauffage (43) d'un outil de formage (42) ; et
- génération d'une pression négative entre la partie plane (41) du corps de support (3) et un moule négatif (44) de l'outil de formage (42) de l'au moins une unité de déformation (4, 4a, 4b) au moyen d'un système à vide de l'outil de formage (42), moyennant quoi, un matériau de la partie plane (41) est placé dans un contour intérieur du moule négatif (44) et ensuite l'au moins une unité de déformation (4, 4a, 4b) est moulée sur le corps de support (3).

Fig.1

Fig.2

A-A

EP 3 790 771 B1

Fig.3

Fig.4

A-A

**Fig.5**

**Fig.6**

Fig.7

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004185795 A1